(19) Europäisches Patentamt
European Patent Office
Office européen des brevets

(11) **EP 3 871 938 A1**

(12) **EUROPEAN PATENT APPLICATION**
published in accordance with Art. 153(4) EPC

(43) Date of publication:
**01.09.2021 Bulletin 2021/35**

(51) Int Cl.:
***B60W 40/00*** (2006.01)

(21) Application number: **19876968.9**

(22) Date of filing: **06.09.2019**

(86) International application number:
**PCT/CN2019/104640**

(87) International publication number:
**WO 2020/082910 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.10.2018 CN 201811243157**

(71) Applicant: **Gree Electric Appliances, Inc. of Zhuhai**
**Zhuhai, Guangdong 519070 (CN)**

(72) Inventors:
• **WEI, Heng**
**Zhuhai, Guangdong 519070 (CN)**
• **LIU, Rensheng**
**Zhuhai, Guangdong 519070 (CN)**
• **PAN, Gaoqiang**
**Zhuhai, Guangdong 519070 (CN)**
• **CHENG, Haisong**
**Zhuhai, Guangdong 519070 (CN)**
• **SONG, Ai**
**Zhuhai, Guangdong 519070 (CN)**

(74) Representative: **Hoffmann Eitle**
**Patent- und Rechtsanwälte PartmbB**
**Arabellastraße 30**
**81925 München (DE)**

(54) **METHOD AND DEVICE FOR DETERMINING PAVEMENT RATING, STORAGE MEDIUM AND AUTOMOBILE**

(57) The present disclosure discloses a method and an apparatus for determining a pavement grade, a storage medium, and a vehicle. The method includes: acquiring current road information of a current road on which a vehicle to be controlled is located; and according to the current road information, identifying on-line by using 1st to Nth-grade pavement sub-Neural Networks (NNs) obtained by off-line training, a current pavement grade of the current road in set 1st to (N+1)th pavement grades and N is a natural number. The solution of the present disclosure can solve the problem of tedious operation process when identifying a road grade during a driving process, and can achieve the effect of simplifying the operation process.

Current road information of a current road on which a vehicle to be controlled is located is acquired — S110

According to the current road information, a current pavement grade of the current road in set 1st to (N+1)th pavement grades is identified On line by using first to Nth-grade pavement sub-Neural Networks (NNs) obtained by off-line training, and N is a natural number — S120

Fig. 1

EP 3 871 938 A1

**Description**

**Cross-Reference to Related Disclosure**

The present disclosure claims priority to Chinese Patent Application No. 201811243157.1, filed on October, 24, 2018 and entitled "Method and Apparatus for Determining Pavement Grade, Storage Medium, and Vehicle", the disclosure of which is hereby incorporated by reference in its entirety.

**Technical Field**

The present disclosure belongs to the technical field of vehicles, in particular, to a method and a apparatus for determining a pavement grade, a storage medium, and a vehicle, and more particularly, to a method for identifying a pavement grade based on multi-neural sub-networks, a apparatus corresponding to this method, a computer-readable storage medium storing instructions corresponding to this method, and a vehicle capable of executing the instructions corresponding to this method.

**Background**

An adjustable suspension mainly refers to an electronic control suspension, and mainly includes an electronic control pneumatic suspension and an electronic control hydro-pneumatic suspension (which is simply referred to as an electronic control suspension). The electronic control suspension can obtain optimal comfort and handling stability by adjusting the height, rigidity and damping of the suspension. However, pavement roughness is one of the main factors that cause vehicle vibration, and the main factor that limits electronic control suspension vehicles to further improve vehicle comfort is lack of sufficient road information. Through the effective identification of the road information, a strong basis is provided for an electronic control suspension system to adjust its spring stiffness and shock absorber damping and to control the height of a vehicle body, so as to further improve the driving smoothness of the electronic control suspension.

Suspension displacement data in a vehicle moving process is not only affected by a pavement grade, but also by vehicle speed and tires. The national standard GT/T 7031 2005 "Mechanical Vibration Road Pavement Spectrum Measurement Data Report" divides a road into 8 grades according to pavement roughness. On roads with different pavement grades, vehicles run at the same speed, the dynamic travels (i.e. displacement change) of suspensions are different, and as the pavement grade is lower, the dynamic travel of the suspension is greater. On roads with the same pavement grade, vehicles run at different speeds, the dynamic travels of suspensions are different, and as the speed is higher, the dynamic travel of the suspension is greater. A large suspension dynamic travel is achieved on a poor road suitable for low-speed driving and a good road for high-speed driving and the prediction of the pavement is affected. Therefore, a road identification model needs to be reasonably set, to avoid misjudgment and improve the accuracy of pavement grade prediction.

Due to the non-linear characteristics of a vehicle vibration system and a pavement spectrum, it is very complicated to identify the road grade during a driving process. Therefore, many scholars have adopted different methods to solve this problem. The pavement grade prediction is achieved by adding sensors in most cases, or the pavement grade is divided too finely, which is not conducive to the real-time control of the electronic control suspension. Various artificial intelligence learning algorithms are used for identifying roads, or if input related information is too simple, the prediction model is not accurate enough; or if input related information is too complicated, the real-time prediction is poor.

**Summary**

Aiming at the defects, the present disclosure provides a method and apparatus for determining a pavement grade, a storage medium, and a vehicle, so as to solve the problem in the conventional art of tedious operation process due to the addition of a sensor for the pavement grade prediction or the over-division of the pavement grade or road identification using various artificial intelligence learning algorithms when identifying a road grade during a driving process, thereby achieving the effect of simplifying the operation process.

The present disclosure provides a method for determining a pavement grade, which includes that: current road information of a current road on which a vehicle to be controlled is located is acquired; and according to the current road information, a current pavement grade of the current road in set $1^{st}$ to $(N+1)^{th}$ pavement grades is identified on-line by using $1^{st}$ to $N^{th}$-grade pavement sub-Neural Networks (NNs) obtained by off-line training, where N is a natural number.

In some embodiments, the operation that the current road information of the current road on which the vehicle to be controlled is located is acquired includes: vehicle speed information of the vehicle to be controlled and detection data of a height sensor of a suspension system of the vehicle are acquired, the vehicle speed information includes a setting duration or a average vehicle speed within a set distance; and/or, vehicle speed information of the vehicle to be controlled and detection data of a height sensor of a suspension system of the vehicle are acquired, the detection data includes height data or displacement data output by the height sensor.

In some embodiments, the method further includes that: the $1^{st}$ to $N^{th}$-grade pavement sub-NNs are obtained via performing off-line training. The operation that the $1^{st}$ to $N^{th}$-grade pavement sub-NNs is obtained via performing off-line training includes that: $1^{st}$ to $N^{th}$ sub-NNs are determined based on a set sub-network structure, a set learning rate, a set inertia coefficient and a set weighting coefficient; and the $1^{st}$ to $N^{th}$ sub-NNs are respectively trained based on collected $1^{st}$ to $N^{th}$ road information sample sets to obtain the $1^{st}$ to $N^{th}$-grade pavement sub-NNs meeting a set BP NN training target.

In some embodiments, in the $1^{st}$ to $N^{th}$ sub-NNs are respectively trained based on the collected 1st to $N^{th}$ road information sample sets, the operation of that a first sub-NN is trained based on a collected first road information sample set includes: road information of a first-grade pavement is taken as input information of an input layer in the first sub-NN when the first-grade pavement is a sample, a target of the first-grade pavement is taken as target information of an output layer in the first sub-NN, and off-line training is performed on the first sub-NN through a hidden layer in the first sub-NN; it is determined whether an error between output information of the output layer in the first sub-NN and the target information is within a set range; if the error is within the set range, the off-line training of the first sub-NN is quitted; if the error is not within the set range, off-line training is re-performed after weighting coefficients of the output layer and the hidden layer in the first sub-NN are adjusted until an error after off-line training is re-performed is within the set range, and off-line training of the first sub-NN is quitted; or if the error is not within the set range, off-line training is re-performed after weighting coefficients of the output layer and the hidden layer in the first sub-NN are adjusted until count of re-performing off-line training reaches a set total cycle count, and off-line training of the first sub-NN is quitted.

In some embodiments, the operation that the weighting coefficients of the output layer and the hidden layer in the first sub-NN are adjusted includes that: the first-grade pavement is taken as a sample, the road information of the first-grade pavement is collected as a training set and a target, and the weighting coefficients of an output layer and a hidden layer in a BP NN of the first-grade pavement are determined according to the training set and the target.

In some embodiments, the BP NN training target includes: a geometric mean value of a pavement roughness; and/or, activation functions from two layers of BP networks in the input layer, the hidden layer and the output layer of each NN of the $1^{st}$ to $N^{th}$ sub-NNs are sigmoid functions; and/or, the number of nodes of the hidden layer of each NN of the $1^{st}$ to $N^{th}$ sub-NNs is 6-10.

In some embodiments, the $1^{st}$ to $(N+1)^{th}$ pavement grades include: 1st to $N^{th}$ pavement grades matched with the $1^{st}$ to $N^{th}$-grade pavement sub-NNs, and an $(N+1)^{th}$ pavement grade matched with none of the $1^{st}$ to $N^{th}$-grade pavement sub-NNs, the operation that the current pavement grade of the current road in the set $1^{st}$ to $(N+1)^{th}$ pavement grades is identified on-line includes: a pavement grade of the current road is judged by using a current set weight matrix of a any grade pavement sub-NN in the $1^{st}$ to $N^{th}$-grade pavement sub-NNs; when current road information input by the any grade pavement sub-NN in the $1^{st}$ to $N^{th}$-grade pavement sub-NNs and result information output by a weighting coefficient matrix trained by the any grade pavement sub-NN do not meet a pavement target range set by a corresponding grade NN, sequentially the pavement grade of the current road judged by using other set weight matrices of other grade pavement sub-NNs in the 1st to $N^{th}$-grade pavement sub-NNs; when current road information input by the any grade pavement sub-NN in the $1^{st}$ to $N^{th}$-grade pavement sub-NNs and result information output by a weighting coefficient matrix trained by the any grade pavement sub-NN meet a pavement target range set by a corresponding grade NN, that the pavement grade of the current road is a random pavement grade in 1st to $N^{th}$ pavement grades corresponding to the any grade pavement sub-NN is determined; or, when current road information input by all grade pavement sub-NNs in the 1st to $N^{th}$-grade pavement sub-NNs and result information output by weighting coefficient matrixes trained by all grade pavement sub-NN do not meet a pavement target range set by a corresponding grade NN, that the pavement grade of the current road is the $(N+1)^{th}$ pavement grade is determined.

Matching with the above method, another aspect of the present disclosure provides a apparatus for determining a pavement grade, which includes: a real-time acquisition component, configured to acquire current road information of a current road on which a vehicle to be controlled is located; and an on-line identification component, configured to identify on-line by using $1^{st}$ to $N^{th}$-grade pavement sub-Neural Networks (NNs) obtained by off-line training, a current pavement grade of the current road in set $1^{st}$ to $(N+1)^{th}$ pavement grades, according to the current road information, wherein N is a natural number.

In some embodiments, the operation that the real-time acquisition component acquires the current road information of the current road on which the vehicle to be controlled is located includes: vehicle speed information of the vehicle to be controlled and detection data of a height sensor of a suspension system of the vehicle are acquired, the vehicle speed information includes a setting duration or a average vehicle speed within a set distance; and/or, vehicle speed information of the vehicle to be controlled and detection data of a height sensor of a suspension system of the vehicle are acquired, the detection data includes height data or displacement data output by the height sensor.

In some embodiments, the apparatus further includes: an off-line training component, configured to obtain the

1st to Nth-grade pavement sub-NNs via performing off-line training. The operation that the off-line training component obtains the 1st to Nth-grade pavement sub-NNs via performing off-line training includes that: 1st to Nth sub-NNs are determined based on a set sub-network structure, a set learning rate, a set inertia coefficient and a set weighting coefficient; and the 1st to Nth sub-NNs are respectively trained based on collected 1st to Nth road information sample sets to obtain the 1st to Nth-grade pavement sub-NNs meeting a set BP NN training target.

In some embodiments, in the off-line training component respectively training the 1st to Nth sub-NNs based on the collected 1st to Nth road information sample sets, the off-line training component training a first sub-NN based on a collected first road information sample set comprises: road information of a first-grade pavement is taken as input information of an input layer in the first sub-NN when the first-grade pavement is a sample, a target of the first-grade pavement is taken as target information of an output layer in the first sub-NN, and off-line training is performed on the first sub-NN through a hidden layer in the first sub-NN; whether an error between output information of the output layer in the first sub-NN and the target information is within a set range is determined; if the error is within the set range, the off-line training of the first sub-NN is quitted; if the error is not within the set range, off-line training is re-performed after weighting coefficients of the output layer and the hidden layer in the first sub-NN are adjusted until an error after off-line training is re-performed is within the set range, and off-line training of the first sub-NN is quitted; or if the error is not within the set range, off-line training is re-performed after weighting coefficients of the output layer and the hidden layer in the first sub-NN are adjusted until count of re-performing off-line training reaches a set total cycle count, and off-line training of the first sub-NN is quitted..

In some embodiments, the operation that the off-line training component adjusts weighting coefficients of the output layer and the hidden layer in the first sub-NN includes that: the first-grade pavement is taken as a sample, the road information of the first-grade pavement is collected as a training set and a target, and the weighting coefficients of an output layer and a hidden layer in a BP NN of the first-grade pavement are determined according to the training set and the target.

In some embodiments, the BP NN training target includes: a geometric mean value of pavement roughness; and/or, activation functions from two layers of BP networks in the input layer, the hidden layer and the output layer of each NN of the 1st to Nth sub-NNs are sigmoid functions; and/or, the number of nodes of the hidden layer of each NN of the 1st to Nth sub-NNs is 6-10.

In some embodiments, the 1st to (N+1)th pavement grades include: 1st to Nth pavement grades matched with the 1st to Nth-grade pavement sub-NNs, and an (N+1)th pavement grade matched with none of the 1st to Nth-grade pavement sub-NNs, The operation that the on-line identification component identifies on-line the current pavement grade of the current road in the set 1st to (N+1)th pavement grades includes: a pavement grade of the current road is judged by using a current set weight matrix of a any grade pavement sub-NN in the 1st to Nth-grade pavement sub-NNs; when current road information input by the any grade pavement sub-NN in the 1st to Nth-grade pavement sub-NNs and result information output by a weighting coefficient matrix trained by the any grade pavement sub-NN do not meet a pavement target range set by a corresponding grade NN, sequentially the pavement grade of the current road judged by using other set weight matrices of other grade pavement sub-NNs in the 1st to Nth-grade pavement sub-NNs; when current road information input by the any grade pavement sub-NN in the 1st to Nth-grade pavement sub-NNs and result information output by a weighting coefficient matrix trained by the any grade pavement sub-NN meet a pavement target range set by a corresponding grade NN, that the pavement grade of the current road is a random pavement grade in 1st to Nth pavement grades corresponding to the any grade pavement sub-NN is determined; or, when current road information input by all grade pavement sub-NNs in the 1st to Nth-grade pavement sub-NNs and result information output by weighting coefficient matrixes trained by all grade pavement sub-NN do not meet a pavement target range set by a corresponding grade NN, that the pavement grade of the current road is the (N+1)th pavement grade is determined.

Matching with the above apparatus, another aspect of the present disclosure provides a vehicle, which includes: the apparatus for determining a pavement grade described above.

Matching with the above method, another aspect of the present disclosure provides a storage medium, which has multiple instructions stored therein. The multiple instructions are loaded by a processor to perform the method for a determining pavement grade described above.

Matching with the above method, another aspect of the present disclosure provides a vehicle, which includes: a processor for executing multiple instructions; and a memory for storing the multiple instructions. The multiple instructions are stored by the memory and loaded by the processor to perform the method for a determining pavement grade described above.

In the technique solutions of the present disclosure, an algorithm is used which combines training off line three different pavement grade targets by three sub-NNs provided by training targets of three pavement grades, and on-line cyclic identification and judgment of the corresponding pavement grades, so that the identification of four common pavements is realized, the disclosure problem of pavement identification is effectively solved, and the operation process is greatly simplified.

Further, according to the technique solutions of the present disclosure, the pavement roughness grade identification based on the off-line and on-line BP NNs does not need to know a complicated relationship between an input signal and an output signal, and a learning algorithm is used for approximation and depends on the reliability of the learning algorithm.

Further, according to the technique solutions of the present disclosure, the displacement sensor and the speed information are only used, the height sensor information and the speed information is adopted, the type of the displacement sensor is not limited, the accuracy and the reliability of the learning algorithm are depended on, and the accuracy and the reliability are improved.

Further, trough an algorithm which combines training off line three different pavement grade targets by three sub-NNs provided by training targets of three pavement grades, and on-line cyclic identification and judgment of the corresponding pavement grades, the technique solutions of the present disclosure is more practical and efficient, and the training is accurate and rapid in convergence.

Further, according to the technique solutions of the present disclosure, the root mean square of the suspension dynamic travel of data of two paths of displacement sensors on the left side and the right side is used as input, so that the method is more accurate; an output layer adopts a nonlinear sigmoid function, so that the convergence is faster; three common pavement grades are trained and judged, and the rapid and efficient design of four pavements is identified; and the reliability of different sub-network training and the completeness of the identification model according to different grade pavement training data are good, and the reliability is high.

Therefore, according to the technique solutions of the present disclosure, multiple sub-NNs are trained off line, and then the multiple sub-NNs are used for performing on-line identification on a road grade, so as to solve the problem in the conventional art of tedious operation process due to the addition of a sensor for the pavement grade prediction or the over-division of the pavement grade or road identification using various artificial intelligence learning algorithms when identifying a road grade during a driving process. Thus, the defects in the conventional art of tedious operation process, poor accuracy and poor real-time performance are overcome, and the beneficial effects of simple operation process, good accuracy and good real-time performance are achieved.

Other features and advantages of the present disclosure will be explained in the subsequent description, and partly become obvious from the description, or be understood by implementing the present disclosure.

The technical solutions of the present disclosure will be further described in detail below through the accompanying drawings and embodiments.

## Brief Description of the Drawings

Fig. 1 is a schematic flowchart of some embodiments of a method for determining a pavement grade of the present disclosure;

Fig. 2 is a schematic flowchart of some embodiments of obtaining 1st to $N^{th}$-grade pavement sub-NNs via performing off-line training in the method of the present disclosure;

Fig. 3 is a schematic flowchart of some embodiments of training a first sub-NN based on a collected first road information sample set in the method of the present disclosure;

Fig. 4 is a schematic flowchart of some embodiments of performing on-line identification on a current pavement grade of a current road in set $1^{st}$ to $(N+1)^{th}$ pavement grades in the method of the present disclosure;

Fig. 5 is a schematic structural diagram of some embodiments of an apparatus for determining a pavement grade of the present disclosure;

Fig. 6 is a schematic structural diagram of a specific embodiment of a method for determining a pavement grade of the present disclosure, particularly a schematic structural diagram of a pavement grade identification model based on an optimized BP NN; and

Fig. 7 is a schematic structural diagram of a specific embodiment of a NN in the method for determining a pavement grade of the present disclosure, particularly a schematic structural diagram of a certain-grade pavement sub-NN of a pavement grade identification model.

With reference to the drawings, the reference symbols in the embodiments of the present disclosure are as follows:

102, real-time acquisition component; 104, on-line identification component; 106, off-line training component.

## Detailed Description of the Embodiments

In order to make the objectives, technical solutions and advantages of the present disclosure clearer, the technical solutions of the present disclosure will be clearly and completely described hereinbelow with specific embodiments of the present disclosure and the corresponding drawings. It is apparent that the described embodiments are only part of the embodiments of the present disclosure, not all of the embodiments. All other embodiments obtained by those of ordinary skill in the art based on the embodiments of the disclosure without creative efforts should fall within the scope of protection of the disclosure.

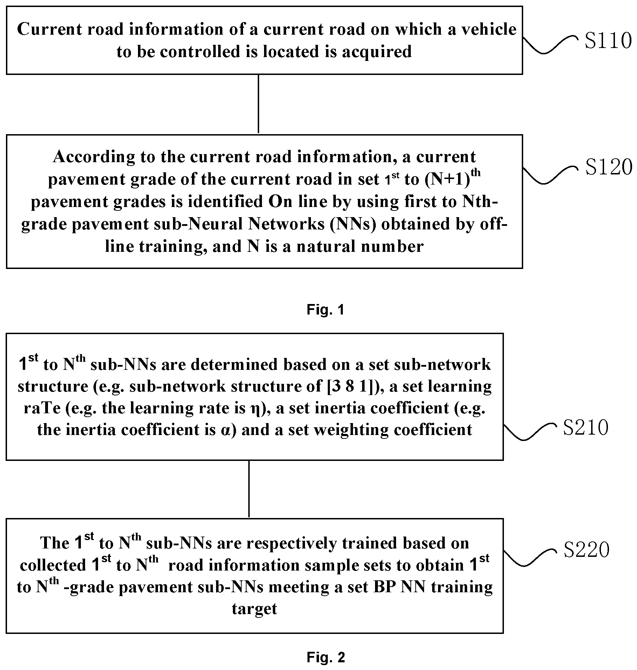

According to some embodiments of the present disclosure, a method for determining a pavement grade is provided. Fig. 1 shows a schematic flowchart of some embodiments of a method of the present disclosure. The method for determining a pavement grade includes step S110 and step S120.

At step S110, current road information of a current road on which a vehicle to be controlled is located is acquired.

In some embodiments, the operation in step S110 that the current road information of the current road on which the vehicle to be controlled is located is acquired includes that: vehicle speed information of the vehicle to be controlled and detection data of a height sensor of a suspension system of the vehicle are acquired.

Some embodiments of the present disclosure, the vehicle speed information includes a average vehicle speed within a set distance or within a set duration; some other embodiments of the present disclosure, the detection data includes height data or displacement data output by the height sensor. Some other embodiments of the present disclosure, the vehicle speed information includes a average vehicle speed within a set distance or within a set duration; the detection data includes height data or displacement data output by the height sensor. For example, the detection data, which is an output height/displacement (i.e. travel) data of the height sensor, is converted into root mean square data of a dynamic travel (i.e. a real-time travel minus an initial travel) by a certain preprocessing of an available data stream over a certain period, which is convenient for the following NN algorithm to be used as input.

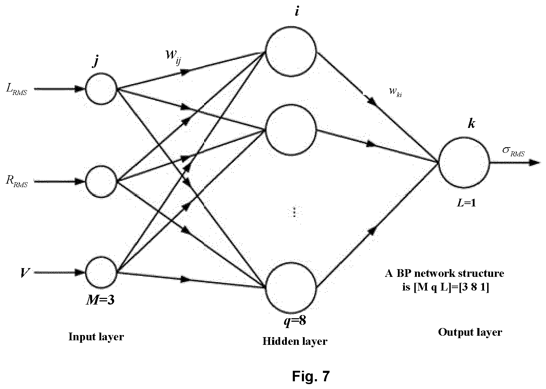

For example, the pavement grade evaluation and prediction can be carried out only by utilizing the height sensor data and the vehicle speed information of the suspension system. Input nodes (i.e. neurons) are height sensor data and speed information (the height sensor data and speed information are necessary information for an electronic control suspension or an adjustable suspension, and no additional installation is required); the output is the root mean square value of pavement roughness (GT/T 7031), and eight intermediate nodes are arranged, as shown in Fig. 7, and the formula is the whole transfer function and weight calculation process.

For example, a multi-sensor (such as a displacement sensor, a gyroscope and a GPS) mode does not need to be used for obtaining accurate parameters of a mathematical model, only the displacement sensor and the speed information are used, the method of the height sensor information and the speed information is utilized, the type of the displacement sensor is not limited, and the accuracy and the reliability of a learning algorithm are depended on. The root mean square of the suspension dynamic travel of data of two paths of displacement sensors on the left side and the right side is used as input, so that the method is more accurate; and the output layer adopts a nonlinear sigmoid function, so that the convergence is faster.

Therefore, by acquiring vehicle speed information of a vehicle to be controlled and detection data of a height sensor of a suspension system of the vehicle, hardware equipment does not need to be additionally arranged, the acquisition mode is simple and convenient, and the accuracy and reliability of the acquired data can be guaranteed.

At step S120, according to the current road information, a current pavement grade of the current road in set $1^{st}$ to $(N+1)^{th}$ pavement grades is identified on-line by using $1^{st}$ to $N^{th}$-grade pavement sub-Neural Networks (NNs) obtained by off-line training, and N is a natural number.

For example, by means of off-line learning and on-line prediction, the road is divided reasonably by a BP NN learning algorithm, the relationship between road input information and pavement grades is perfected, and the reasonable number of network nodes is set to realize the effect of accurate and efficient prediction of the pavement grade. For example, the off-line training and on-line sequence recognition methods of NN multi-sub-networks are utilized to realize the output of four pavement grades. If N=3, three sub-NNs are obtained through three kinds of pavement identification, on-line identification and judgment are added, and the speed of each kind of pavement identification is high, so that the speed and the efficiency are improved.

Therefore, on-line identification is performed on a current pavement grade of the current road based on the current road information of the vehicle to be controlled using multiple pavement sub-NNs obtained by off-line training, the operation process is simple, and the identification efficiency is high.

The $1^{st}$ to $(N+1)^{th}$ pavement grades includes: $1^{st}$ to $N^{th}$ pavement grades matched with the $1^{st}$ to $N^{th}$-grade pavement sub-NNs, and an $(N+1)^{th}$ pavement grade matched with none of the $1^{st}$ to $N^{th}$-grade pavement sub-NNs.

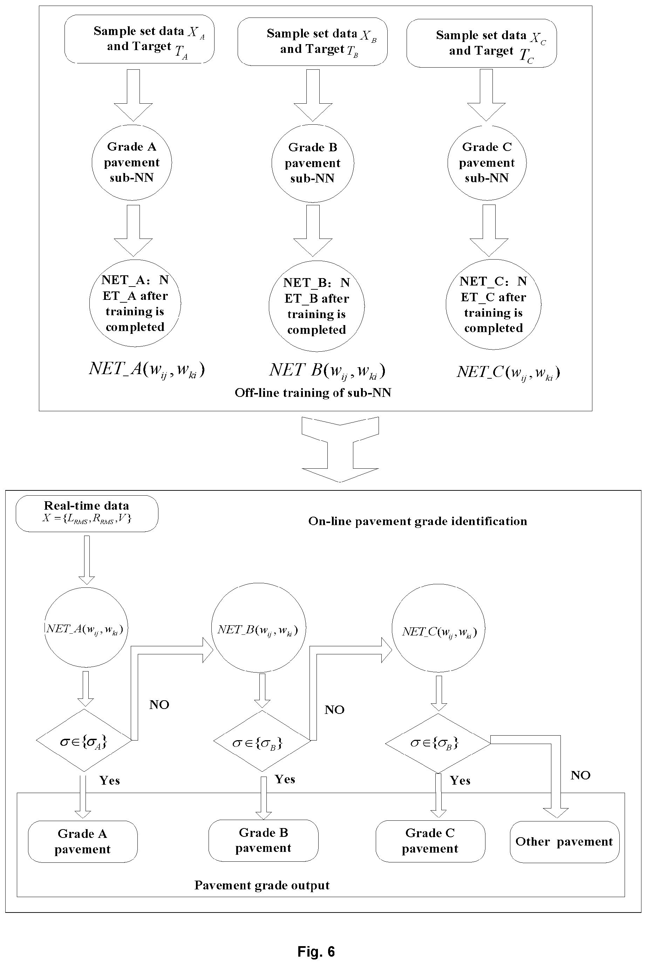

For example, the input information of a pavement identification model is improved by reducing the grade target of a pavement roughness, and the efficiency and accuracy of the NN learning algorithm are improved by combining off-line data set training and on-line identification. As shown in Fig. 6, the road pavement grades are set to be four grades, three sub-NNs are trained according to a training algorithm, namely NET_A (wij, wki), NET_B (wij, wki) and NET_C (wij, wki), where wij, wki are weight matrix elements of a hidden layer and an output layer, the training targets of the three networks are pavement grades A, B and C, and value sets {σA}, {σB} and {σC} of output neurons of the grades are judged.

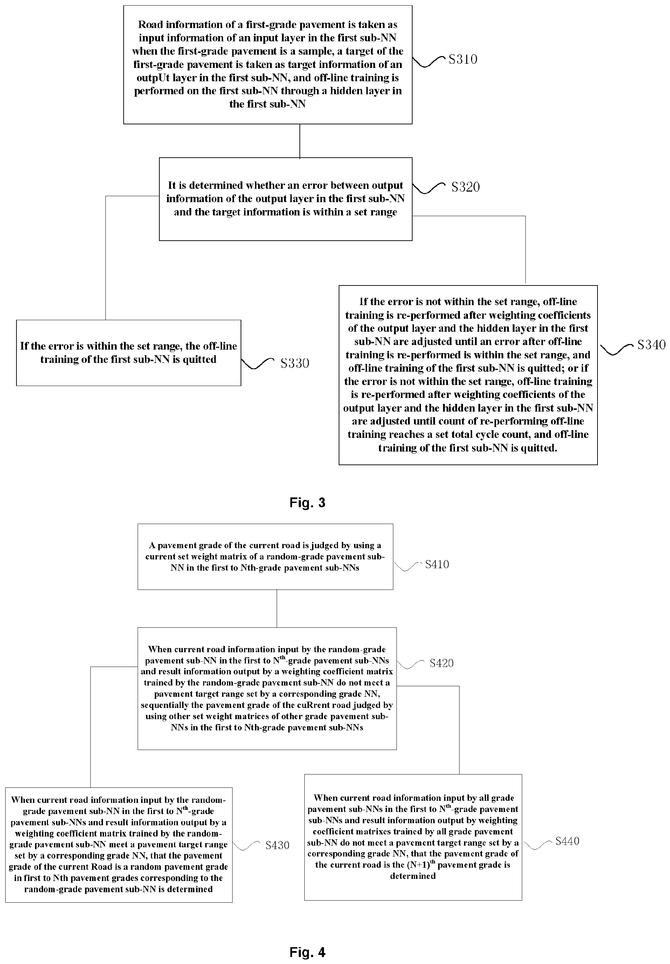

In some embodiments, with reference to Fig. 4, which shows a schematic flowchart of some embodiments of performing on-line identification on a current pavement grade of a current road in set 1st to (N+1)th pavement grades in the method of the present disclosure, the specific process of performing on-line identification on the current pavement grade in set 1st to (N+1)th pavement grades in step S120 is further described, which includes step S410 to step S440.

At step S410, a pavement grade of the current road is judged by using a current set weight matrix of a any grade pavement sub-NN in the 1st to Nth-grade pavement sub-NNs.

At step S420, when current road information input by the any grade pavement sub-NN in the 1st to Nth-grade pavement sub-NNs and result information output by a weighting coefficient matrix trained by the any grade pavement sub-NN do not meet a pavement target range set by a corresponding grade NN, sequentially the pavement grade of the current road judged by using other set weight matrices of other grade pavement sub-NNs in the 1st to Nth-grade pavement sub-NNs.

At step S430, when current road information input by the any grade pavement sub-NN in the 1st to Nth-grade pavement sub-NNs and result information output by a weighting coefficient matrix trained by the any grade pavement sub-NN meet a pavement target range set by a corresponding grade NN, that the pavement grade of the current road is a random pavement grade in 1st to Nth pavement grades corresponding to the any grade pavement sub-NN is determined.

Or, at step S440, when current road information input by all grade pavement sub-NNs in the 1st to Nth-grade pavement sub-NNs and result information output by weighting coefficient matrixes trained by all grade pavement sub-NN do not meet a pavement target range set by a corresponding grade NN, that the pavement grade of the current road is the (N+1)th pavement grade is determined.

For example, four pavement grades (A, B, C and others) are classified according to the kind of pavement grade output. Only three sub-networks need to be trained, when input and output are different, different weight matrices are sequentially used for judging the pavement grade, and when the results obtained by the three weight matrices are not suitable, a fourth type pavement is judged.

For example, three common pavement grades are trained off-line based on a BP NN, the three types namely A, B, C and other type are identified on-line, the algorithm is optimized, and the calculation speed of pavement identification is improved.

Therefore, the current pavement grade of the current road is identified on-line based on the current road information of the current road on which the vehicle to be controlled is located using multiple grade pavement sub-NNs obtained by off-line training, the identification mode is simple, and the identification efficiency is high.

In some embodiments, the method further includes that: at least before identifying on-line the current pavement grade of the current road in the set 1st to (N+1)th pavement grades, or even before acquiring the current road information of the current road on which the vehicle to be controlled is located, off-line training is performed to obtain the 1st to Nth-grade pavement sub-NNs.

In some embodiments, with reference to Fig. 2, which shows a schematic flowchart of some embodiments of training off-line to obtain 1st to Nth-grade pavement sub-NNs in the method of the present disclosure, the specific process of training off line to obtain the 1st to Nth-grade pavement sub-NNs is further described, which included step S210 and step S220.

At step S210, 1st to Nth sub-NNs are determined based on a set sub-network structure (e.g. sub-network structure of [3 8 1]), a set learning rate (e.g. the learning rate is η), a set inertia coefficient (e.g. the inertia coefficient is α) and a set weighting coefficient.

For example, there are N sub-networks, N equals to a training target class minus one. For example, there are four pavement grades, and then N=3.

At step S220, the 1st to Nth sub-NNs are respectively trained based on collected 1st to Nth road information sample sets to obtain 1st to Nth-grade pavement sub-NNs meeting a set BP NN training target.

Therefore, through multiple sub-NNs determined according to the set parameters such as the sub-network structure, the learning rate, the inertia coefficient and the weighting coefficient, the multiple sub-NNs are trained based on the collected road information sample set, multiple grade pavement sub-NNs meeting the set target information, namely the BP NN training target, are obtained, and the multiple sub-NNs are respectively trained, so that the efficiency is high, and the flexibility is good.

In some embodiments, the BP NN training target includes: a geometric mean value of pavement roughness.

In some embodiments, in the 1st to Nth sub-NNs, activation functions from two layers of BP networks in the input layer, the hidden layer and the output layer of each NN are sigmoid functions.

For example, a two-layer BP NN is used, a sigmoid function is applied to both a hidden layer and an output layer, and the output of training data is easy to converge.

In some embodiments, in the 1st to Nth sub-NNs, the number of nodes of the hidden layer of each NN is 6-10.

For example, according to the national standard and the most common driving pavement of the vehicle, the eight-grade pavement roughness in the national standard GT/T 7031 2005 is changed into four grades of pavements, only three grades of pavement grades need to be trained and judged, and a pavement identification model of off-line training plus on-line identification BP NNs as shown in Fig. 6 is formed. Since the on-line identification grades are reduced, the BP network can be optimized, the number of neurons in the hidden layer is increased, the identification is more accurate, and the operation complexity is not too high.

For example, as shown in Fig. 7, this is a two-layer BP NN with three input neurons, eight hidden neurons and one output neuron. Considering the vehicle as a planar mechanism running on a pavement, in four tire suspension points in contact with the pavement, a left suspension displacement travel, a right suspension displacement travel and a vehicle speed should most reflect the input of the pavement.

Therefore, by using the BP network and the sigmoid function and setting an appropriate number of nodes in the hidden layer, the training efficiency and effect can be improved.

In some embodiments, in step S220 of respectively training the 1st to Nth sub-NNs based on collected 1st to Nth road information sample sets, with reference to Fig. 3, which shows a schematic flowchart of some embodiments of training a first sub-NN based on a collected first road information sample set in the method of the present disclosure, the specific process of training the first sub-NN based on the collected first road information sample set is further described, which includes step S310 to step S340.

At step S310, road information of a first-grade pavement is taken as input information of an input layer in the first sub-NN when the first-grade pavement is a sample, a target of the first-grade pavement is taken as target information of an output layer in the first sub-NN, and off-line training is performed on the first sub-NN through a hidden layer in the first sub-NN.

At step S320, it is determined whether an error between output information of the output layer in the first sub-NN and the target information is within a set range.

At step S330, if the error is within the set range, the off-line training of the first sub-NN is quitted.

Or, at step S340, if the error is not within the set range, weighting coefficients of the output layer and the hidden layer in the first sub-NN are adjusted and then off-line training is re-performed until an error after off-line training is re-performed is within the set range, or off-line training of the first sub-NN is quitted after count of re-performing off-line training reaches a set total cycle count.

For example, an error evaluation function is output, it is judged whether the error is less than a set error, and if so, training is quit. The output is unlikely to coincide exactly with the target, so the error range is set in order to better identify the pavement grade attributes of training samples.

Therefore, a pavement sub-NN corresponding to the target information is obtained through off-line training in an error mode of comparing input information with output information in each sub-NN, the training mode is simple and convenient, the efficiency is high, and the accuracy of the pavement sub-NN obtained through training is good.

In some embodiments, the operation in step S340 that weighting coefficients of the output layer and the hidden layer in the first sub-NN are adjusted included that: the first-grade pavement is taken as a sample, the road information of the first-grade pavement is collected as a training set and a target, and the weighting coefficients of an output layer and a hidden layer in a BP NN of the first-grade pavement are determined according to the training set and the target.

For example, the process of adjusting the weighting coefficients is an execution process of a standard BP NN algorithm, and besides the training set and the target, if the error between an output value of the training set through the weighting coefficients and the target reach the error range, the training is terminated, and the weighting coefficients of this NN (i.e. a mapping relationship between the training set and the target) are obtained.

Therefore, the weighting coefficients of the output layer and the hidden layer in the BP NN are determined according to the road information in the corresponding samples as the training set and the target, the determination mode is simple and convenient, and the determination result is good in accuracy.

A large number of tests verify that in the technique solutions of the present disclosure, an algorithm is used which combines training off line three different pavement grade targets by three sub-NNs provided by training targets of three pavement grades, and on-line cyclic identification and judgment of the corresponding pavement grades, so that the identification of four common pavements is realized, the problem of pavement identification in some methods known to the inventors is effectively solved, and the operation process is greatly simplified.

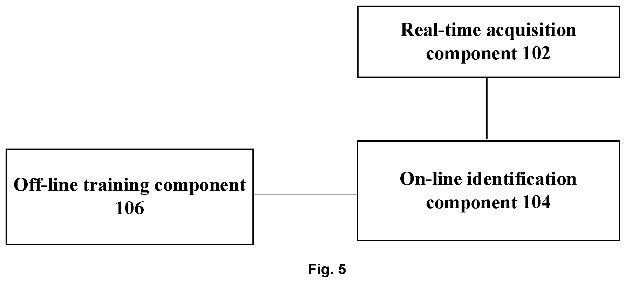

According to some embodiments of the present disclosure, an apparatus for determining a pavement grade corresponding to the method for determining a pavement grade is also provided. Fig. 5 shows a schematic structure diagram of some embodiments of an apparatus of the present disclosure. The apparatus for determining a pavement grade included a real-time acquisition component 102 and on-line identification component 104.

In some optional embodiments, the real-time acquisition component 102 is configured to acquire current road information of a current road on which a vehicle to be controlled is located. For specific functions and processing of the real-time acquisition component 102, reference is made to step S110.

In some embodiments, the operation that the real-time acquisition component 102 acquires the current road information of the current road on which the vehicle to be controlled is located includes: the real-time acquisition component 102 also is specifically configured to acquire vehicle speed information of the vehicle to be controlled and detection data of a height sensor of a suspension system of the vehicle.

Some embodiments of the present disclosure, the vehicle speed information includes a average vehicle speed within a set distance or within a set duration; some other embodiments of the present disclosure, the detection data includes height data or displacement data output by the height sensor. Some other embodiments of the present disclosure, the vehicle speed information includes a average vehicle speed within a set distance or within a set duration; the detection data includes height data or displacement data output by the height sensor. For example, the detection data, which is an output height/displacement (i.e. travel) data of the height sensor, is converted into root mean square data of a dynamic travel (i.e. a real-time travel minus an initial travel) by a certain preprocessing of an available data stream over a certain period, which is convenient for the following NN algorithm to be used as input.

For example, the pavement grade evaluation and prediction can be carried out only by utilizing the height sensor data of and the vehicle speed information of the suspension system. Input nodes (i.e. neurons) are height sensor data and speed information (the height sensor data and speed information are necessary information for an electronic control suspension or an adjustable suspension, and no additional installation is required); the output is the root mean square value of pavement roughness (GT/T 7031), and eight intermediate nodes are arranged, as shown in Fig. 7, and the formula is the whole transfer function and weight calculation process.

For example, a multi-sensor (such as a displacement sensor, a gyroscope and a GPS) mode does not need to be used for obtaining accurate parameters of a mathematical model, only the displacement sensor and the speed information are used, the method of the height sensor information and the speed information is utilized, the type of the displacement sensor is not limited, and the accuracy and the reliability of a learning algorithm are depended on. The root mean square of the suspension dynamic travel of data of two paths of displacement sensors on the left side and the right side is used as input, so that the method is more accurate; and the output layer adopts a nonlinear sigmoid function, so that the convergence is faster.

Therefore, by acquiring vehicle speed information of a vehicle to be controlled and detection data of a height sensor of a suspension system of the vehicle, hardware equipment does not need to be additionally arranged, the acquisition mode is simple and convenient, and the accuracy and reliability of the acquired data can be guaranteed.

In some optional embodiments, the on-line identification component 104 is configured to according to the current road information, identify on-line a current pavement grade of the current road in set $1^{st}$ to $(N+1)^{th}$ pavement grades by using $1^{st}$ to $N^{th}$-grade pavement sub-Neural Networks (NNs) obtained by off-line training, and N is a natural number. For specific functions and processing of the on-line identification component 104, reference is made to step S120.

For example, by means of off-line learning and on-line prediction, the road is divided reasonably by a BP NN learning algorithm, the relationship between road input information and pavement grades is perfected, and the reasonable number of network nodes is set to realize the effect of accurate and efficient prediction of the pavement grade. For example, the off-line training and on-line sequence recognition methods of NN multi-sub-networks are utilized to realize the output of four pavement grades. If N=3, three sub-NNs are obtained through three kinds of pavement identification, on-line identification and judgment are added, and the speed of each kind of pavement identification is high, so that the speed and the efficiency are improved.

Therefore, on-line identification is performed on a current pavement grade of the current road based on the current road information of the vehicle to be controlled using multiple pavement sub-NNs obtained by off-line training, the operation process is simple, and the identification efficiency is high.

The $1^{st}$ to $(N+1)^{th}$ pavement grades includes: $1^{st}$ to $N^{th}$ pavement grades matched with the $1^{st}$ to $N^{th}$-grade pavement sub-NNs, and an $(N+1)^{th}$ pavement grade matched with none of the $1^{st}$ to $N^{th}$-grade pavement sub-NNs.

For example, the input information of a pavement identification model is improved by reducing the grade target of a pavement roughness, and the efficiency and accuracy of the NN learning algorithm are improved by combining off-line data set training and on-line identification. As shown in Fig. 6, the road pavement grades are set to be four grades, three sub-NNs are trained according to a training algorithm, namely NET_A (wij, wki), NET_B (wij, wki) and NET_C (wij, wki), where wij, wki are weight matrix elements of a hidden layer and an output layer, the training targets of the three networks are pavement grades A, B and C, and value sets {σA}, {σB} and {σC} of output neurons of the grades are judged.

In some embodiments, the operation that the on-line identification component 104 performs on-line identification on the current pavement grade of the current road in set $1^{st}$ to $(N+1)^{th}$ pavement grades includes that:

the on-line identification component 104 also is specifically configured to judge a pavement grade of the current road using a current set weight matrix of a any grade pavement sub-NN in the $1^{st}$ to $N^{th}$-grade pavement sub-NNs;. For specific functions and processing of the on-line identification component 104, reference is also made to step S410.

The on-line identification component 104 also is specifically configured to sequentially judge, when current road information input by the any grade pavement sub-NN in the 1st to Nth-grade pavement sub-NNs and result information output by a weighting coefficient matrix trained by the any grade pavement sub-NN do not meet a pavement target range set by a corresponding grade NN, sequentially judging the pavement grade of the current road using other set weight matrices of other grade pavement sub-NNs in the 1st to Nth-grade pavement sub-NNs. For specific functions and processing of the on-line identification component 104, reference is also made to step S420.

For example, when the input information and the sub-network weight coefficient interact, and the output result is inconsistent with the target, the network is switched to the next network to continue execution. That is to say, when the current road information input by the any grade pavement sub-NN in the 1st to Nth-grade pavement sub-NNs and a result output by a weighting coefficient matrix trained by the network do not meet the pavement target range corresponding to the NN, the pavement grade of the current road is sequentially judged using other set weight matrices of other grade pavement sub-NNs in the 1st to Nth-grade pavement sub-NNs.

The on-line identification component 104 also is specifically configured to determine, when current road information input by the any grade pavement sub-NN in the 1st to Nth-grade pavement sub-NNs and result information output by a weighting coefficient matrix trained by the any grade pavement sub-NN meet a pavement target range set by a corresponding grade NN, that the pavement grade of the current road is a random pavement grade in 1st to Nth pavement grades corresponding to the any grade pavement sub-NN. For specific functions and processing of the on-line identification component 104, reference is also made to step S430.

Or, the on-line identification component 104 also is specifically configured to determine, when current road information input by all grade pavement sub-NNs in the 1st to Nth-grade pavement sub-NNs and result information output by weighting coefficient matrixes trained by all grade pavement sub-NN do not meet a pavement target range set by a corresponding grade NN, that the pavement grade of the current road is the $(N+1)^{th}$ pavement grade. For specific functions and processing of the on-line identification component 104, reference is also made to step S440.

For example, four pavement grades (A, B, C and others) are classified according to the kind of pavement grade output. Only three sub-networks need to be trained, when input and output are different, different weight matrices are sequentially used for judging the pavement grade, and when the results obtained by the three weight matrices are not suitable, a fourth type pavement is judged.

For example, three common pavement grades are trained off-line based on a BP NN, the three types namely A, B, C and other type are identified on-line, the algorithm is optimized, and the calculation speed of pavement identification is improved.

Therefore, the current pavement grade of the current road is identified on-line based on the current road information of the current road on which the vehicle to be controlled is located using multiple grade pavement sub-NNs obtained by off-line training, the identification mode is simple, and the identification efficiency is high.

In some embodiments, the off-line training component 106 is configured to perform, at least before identifying on-line the current pavement grade of the current road in the set 1st to $(N+1)^{th}$ pavement grades, or even before acquiring the current road information of the current road on which the vehicle to be controlled is located off-line training to obtain the 1st to Nth-grade pavement sub-NNs.

In some embodiments, the operation that the off-line training component 106 performs off-line training to obtain the 1st to Nth-grade pavement sub-NNs includes that:

the off-line training component 106 also is specifically configured to determine 1st to Nth sub-NNs based on a set sub-network structure (e.g. sub-network structure of [3 8 1]), a set learning rate (e.g. the learning rate is $\eta$), a set inertia coefficient (e.g. the inertia coefficient is $\alpha$) and a set weighting coefficient For specific functions and processing of the off-line training component 106, reference is made to step S210.

For example, there are N sub-networks, N equals to a training target class minus one. For example, there are four pavement grades, and then N=3.

The off-line training component 106 also is specifically configured to respectively train the 1st to Nth sub-NNs based on collected 1st to Nth road information sample sets to obtain 1st to Nth -grade pavement sub-NNs meeting a set BP NN training target. For specific functions and processing of the off-line training component 106, reference is also made to step S220.

Therefore, through multiple sub-NNs determined according to the set parameters such as the sub-network structure, the learning rate, the inertia coefficient and the weighting coefficient, the multiple sub-NNs are trained based on the collected road information sample set, multiple grade pavement sub-NNs meeting the set target information, namely the BP NN training target, are obtained, and the multiple sub-NNs are respectively trained, so that the efficiency is high, and the flexibility is good.

In some embodiments, the BP NN training target includes: a geometric mean value of pavement roughness.

In some embodiments, in the 1st to Nth sub-NNs, activation functions from two layers of BP networks in the input layer, the hidden layer and the output layer of each NN are sigmoid functions.

For example, a two-layer BP NN is used, a sigmoid function is applied to both a hidden layer and an output layer, and the output of training data is easy to converge.

In some embodiments, in the 1st to Nth sub-NNs, the number of nodes of the hidden layer of each NN is 6-10.

For example, according to the national standard and the most common driving pavement of the vehicle, the eight-grade pavement roughness in the national standard GT/T 7031 2005 is changed into four grades of pavements, only three grades of pavement grades need to be trained and judged, and a pavement identification model of off-line training plus on-line identification BP NNs as shown in Fig. 6 is formed. Since the on-line identification grades are reduced, the BP network can be optimized, the number of neurons in the hidden layer is increased, the identification is more accurate, and the operation complexity is not too high.

For example, as shown in Fig. 7, this is a two-layer BP NN with three input neurons, eight hidden neurons and one output neuron. Considering the vehicle as a planar mechanism running on a pavement, in four tire suspension points in contact with the pavement, a left suspension displacement travel, a right suspension displacement travel and a vehicle speed should most reflect the input of the pavement.

Therefore, by using the BP network and the sigmoid function and setting an appropriate number of nodes in the hidden layer, the training efficiency and effect can be improved.

In some embodiments, the operation that the off-line training component 106 trains the first sub-NN based on the collected first road information sample set in the operation of respectively training, by the off-line training component 106, the 1st to Nth sub-NNs based on the collected 1st to Nth road information sample sets includes that:

the off-line training component 106 also is specifically configured to take road information of a first-grade pavement as input information of an input layer in the first sub-NN when the first-grade pavement is a sample, take a target of the first-grade pavement as target information of an output layer in the first sub-NN, and perform off-line training on the first sub-NN through a hidden layer in the first sub-NN. For specific functions and processing of the off-line training component 106, reference is made to step S310.

The off-line training component 106 also is specifically configured to determine whether an error between output information of the output layer in the first sub-NN and the target information is within a set range. For specific functions and processing of the off-line training component 106, reference is also made to step S320.

The off-line training component 106 also is specifically configured to quit, if the error is within the set range, the off-line training of the first sub-NN. For specific functions and processing of the off-line training component 106, reference is also made to step S330.

Or, the off-line training component 106 also is specifically configured to adjust, if the error is not within the set range, weighting coefficients of the output layer and the hidden layer in the first sub-NN and then re-perform off-line training until an error after the off-line training is re-performed is within the set range, or quit the off-line training of the first sub-NN after the count of re-performing off-line training reaches a set total cycle count. For specific functions and processing of the off-line training component 106, reference is also made to step S340.

For example, an error evaluation function is output, it is judged whether the error is smaller than a set error, and if so, training is quit. The output is unlikely to coincide exactly with the target, so the error range is set in order to better identify the pavement grade attributes of training samples.

Therefore, a pavement sub-NN corresponding to the target information is obtained through off-line training in an error mode of comparing input information with output information in each sub-NN, the training mode is simple and convenient, the efficiency is high, and the accuracy of the pavement sub-NN obtained through training is good.

In some embodiments, the operation that the off-line training component 106 adjusts weighting coefficients of the output layer and the hidden layer in the first sub-NN includes that: the off-line training component 106 is specifically configured to take the first-grade pavement as a sample, collect the road information of the first-grade pavement as a training set and a target, and determine the weighting coefficients of an output layer and a hidden layer in a BP NN of the first-grade pavement according to the training set and the target.

For example, the process of adjusting the weighting coefficients is an execution process of a standard BP NN algorithm, and besides the training set and the target, if the error between an output value of the training set through the weighting coefficients and the target reach the error range, the training is terminated, and the weighting coefficients of this NN (i.e. a mapping relationship between the training set and the target) are obtained.

Therefore, the weighting coefficients of the output layer and the hidden layer in the BP NN are determined according to the road information in the corresponding samples as the training set and the target, the determination mode is simple and convenient, and the determination result is good in accuracy.

Since the processing and functions implemented by the apparatus of the present embodiments basically correspond to the foregoing embodiments, principles, and examples of the method shown in Fig. 1 to Fig. 4, the description of the present embodiments is not exhaustive, reference is made to relevant descriptions in the foregoing embodiments, and the description will not be repeated here.

A large number of tests verify that with the technique solutions of the present disclosure, the pavement roughness grade identification based on the off-line and on-line BP NNs does not need to know a complicated relationship between an input signal and an output signal, and a learning algorithm is used for approximation and depends on the reliability of the learning algorithm.

According to some embodiments of the present disclosure, a vehicle corresponding to the apparatus for determining a pavement grade is also provided. The vehicle includes: the apparatus for determining a pavement grade described above.

In some optional embodiments, in order to realize efficient and accurate prediction of the pavement grade, in the technique solutions of the present disclosure, by means of off-line learning and on-line prediction, the road is divided reasonably by a BP NN learning algorithm, the relationship between road input information and pavement grades is perfected, and the reasonable number of network nodes is set to solve the problem of accurate and efficient prediction of the pavement grade in some methods known to the inventors.

In some optional embodiments, according to the technique solutions of the present disclosure, the off-line training and on-line sequence recognition methods of NN multi-sub-networks are utilized to realize the output of four pavement grades.

In some embodiments, a two-layer BP NN is used, a sigmoid function is applied to both a hidden layer and an output layer, and the output of training data is easy to converge.

An NN method is to find a mapping relationship between input and output through training, especially for a nonlinear mapping relationship. For example, neurons and transfer relationships (weights of each connection) of the human brain are simulated. Therefore, the number of stages of established NNs, the number of input nodes and output nodes and the number of intermediate layer nodes are determined. Here, the nodes are neurons, as the number of neurons is greater, the network is more complicated, the mapping relationship may be more realistic, but the calculation efficiency is low. Finally, it is necessary to obtain the most practical training weight matrix, so that in the case of new input, an output result is judged according to the output obtained by weight matrix calculation.

For example, there are eight pavement grades, the input can be speed, multiple displacement (such as displacement in a height direction) sensors, acceleration sensors and the like, all of which are equivalent to input nodes, and the output is a criterion for judging the pavement grade. To identify these eight grades, some practices are to train through a single network (for example, a weight matrix, $[w]_{ij}$, and $[w]_{ki}$) and finally provide an output result directly (for example, a root mean square value of pavement roughness, which can be seen from the complete eight pavement grades shown in Table 1), and this result is used to judge the belonging pavement grade.

Table 1 Pavement roughness classification standard GB/T 7031 2005

| Pavement grade | $G_q(n_0)$ ($n_0=0.1m^{-1}$) geometric mean value | $\sigma_q$ ($0.011m^{-1}<n<2.83m^{-1}$) geometric mean value |
|---|---|---|
| A | $16\times10^{-6}$ m$^3$ | $3.81\times10^3$ m |
| B | $64\times10^{-6}$ m$^3$ | $7.61\times10^{-3}$ m |
| C | $256\times10^{-6}$ m$^3$ | $15.23\times10^{-3}$ m |
| D | $1024\times10^{-6}$ m$^3$ | $30.45\times10^{-3}$ m |
| E | $4096\times10^{-6}$ m$^3$ | $60.90\times10^{-3}$ m |
| F | $16384\times10^{-6}$ m$^3$ | $121.80\times10^{-3}$ m |
| G | $65536\times10^{-6}$ m$^3$ | $243.61\times10^{-3}$ m |
| H | $262144\times10^{-6}$ m$^3$ | $487.22\times10^{-3}$ m |

$G_q(n_0)$ is the power spectral density of pavement roughness when a spatial frequency $n_0$ is $0.1m^{-1}$. $\sigma_q$ is a standard deviation of pavement roughness when a spatial frequency n meeting $0.011$ m$^{-1}<n<2.83m^{-1}$.

However, this is problematic in that mapping from input to output for a large number of pavement grades is first required, and sometimes it is not necessary to solve all grade discrimination using only one weight matrix (i.e., a network), and it may not be possible to converge or perform poorly.

Therefore, according to the technique solutions of the present disclosure, an idea of multiple sub-NNs (for example, multiple weight matrices) is proposed. Specifically, four pavement grades (A, B, C and others) are classified according to the types of pavement grade output. Only three sub-networks need to be trained, when input and output are different, different weight matrices are sequentially used for judging the pavement grade, and when the results obtained by the three weight matrices are not suitable, a fourth type pavement is judged.

For example, during training, the data input of a grade A pavement is data$_A$, the training target is a roughness standard deviation $\sigma_A$ of the grade A pavement, and a grade A pavement weight matrix M$_A$ is obtained after the training is completed. During identification, data input datax belonging to which grade pavement runs in different weight matrices sequentially to obtain output O$_X$, if O$_X$ outputs O$_A$ under the action of M$_A$ and a target value range of a grade A pavement is $\{\sigma_A\}$, it is determined that the current pavement is the grade A pavement. Otherwise, an M$_B$ matrix continues to be used for output O$_B$, it is judged whether it is within a target range $\{\sigma_B\}$ of a grade B pavement, if so, it is determined that the current pavement is the grade B pavement. Otherwise, an M$_C$ matrix continues to be used for output O$_C$, it is judged whether it is within a target range $\{\sigma_C\}$ of a grade C pavement, if so, it is determined that the current pavement is the grade C pavement. Otherwise, the current pavement is another pavement.

According to the national standard and the most common driving pavement of the vehicle, the eight-grade pavement roughness in the national standard GT/T 7031 2005 is changed into four kinds of pavements, only three kinds of pavement grades need to be trained and judged, and a pavement identification model of off-line training plus on-line identification BP NNs as shown in Fig. 6 is formed. Since the on-line identification level is reduced, the BP network can be optimized, the number of neurons in the hidden layer is increased, the identification is more accurate, and the operation complexity is not too high.

In some optional embodiments, acceleration sensors and the like are adopted to evaluate the pavement grade in traditional pavement grade evaluation, so that the problem that the hardware cost of the adjustable suspension is increased. According to the technique solutions of the present disclosure, the pavement grade evaluation and prediction can be carried out only by utilizing the height sensor data and the vehicle speed information of the suspension system.

Input nodes (i.e. neurons) are height sensor data and speed information (the height sensor data and speed information are necessary information for an electronic control suspension or an adjustable suspension, and no additional installation is required); the output is the root mean square value of pavement roughness (GT/T 7031), and eight intermediate nodes are arranged, as shown in Fig. 7, and the formula is the whole transfer function and weight calculation process.

In some optional embodiments, in the case where most learning algorithms are either too complicated or too coarse, according to the present disclosure, the input information of a pavement identification model is improved by reducing the grade target of pavement roughness, and the efficiency and accuracy of the NN learning algorithm are improved by combining off-line data set training and on-line identification.

For example, the input information of the pavement identification model is improved by changing the input information of the pavement identification model into height sensor data and speed information of an electronic control suspension or an adjustable suspension.

As shown in Fig. 6, the pavement grades are set to be four grades, three sub-NNs are trained according to a training algorithm, namely NET_A (Wij, Wki), NET_B (Wij, Wki) and NET_C (Wij, Wki), where Wij, Wki are respectively weight matrix elements of a hidden layer and an output layer, the training targets of the three networks are three pavement grades A, B and C, and value sets $\{\sigma_A\}$, $\{\sigma_B\}$ and $\{\sigma_C\}$ of output neurons of the grades are judged.

The existing data are input and output sample data sets, X and T respectively. X is an input data set $\{L_{RMS}, R_{RMS}, V\}$, and T is a sample target data set. Here, there are four types of pavements including ABC and the other one, and by training three of them, there are three sample sets X$_A$, X$_B$, X$_C$ and three pavement target sets: T$_A$=$\{\sigma_A$=3.81$\times$10$^{-3}$m$\}$, T$_B$=$\{\sigma_B$=7.61$\times$10$^{-3}$m$\}$, T$_C$=$\{\sigma_C$=15.23$\times$10$^{-3}$m$\}$. The target of training is that the target is approached from input to output, so there are also setup errors in the algorithm.

An error evaluation function is output, it is judged whether the error is less than a set error, and if so, training is quit:

$$\varepsilon > J = \sum_{p=1}^{N} J_p = \frac{1}{2} \sum_{p=1}^{N} \sum_{k=1}^{L} (t_k^p - o_k^p)^2 ,$$

N samples off-line learning.

$\varepsilon$ refers to the setting error, and as the setting error is low, the training count is large, and even convergence cannot be achieved; if the setting error is high, the training precision is low; J is an error evaluation function and is a total error, J$_p$ is an output error of a single sample, p is a sample, and p=1-N, that is, the total number of samples is N; k is the output, k=1-L, i.e. the total number of output nodes is L.

The output is unlikely to coincide exactly with the target, so the error range is set in order to better identify the pavement grade attributes of training samples.

The commercial vehicle of the electronic control vehicle suspension are driving on grade A, B and C roads specified by national standard, and along with the continuous improvement of pavement grades, the difference road proportion can be classified into other types. According to the present disclosure, the off-line training of three common pavement grades is performed based on a BP NN, the three grades namely A, B and C are identified on-line, the algorithm is optimized, and the calculation speed of pavement identification is improved.

In some optional embodiments, the technique solutions of the present disclosure also are to divide the range of values of an output result o. According to the national standard and table 1, it can be seen that the root mean square value of pavement roughness $\sigma_A$=3.81×10$^{-3}$m, $\sigma_B$=7.61×10$^{-3}$m, $\sigma_C$=15.23×10$^{-3}$m, etc. are equal ratio relations. By using results output by sub-networks of a NN, according to different set error, the degree of approximation to the national standard specified value of the root mean square of the target pavement is different for the closed loop and rationality of the algorithm. The discrimination intervals are set to be $\{\sigma_A\}$, $\{\sigma_B\}$, $\{\sigma_C\}$ in Fig. 6, and the value ranges are as follows:

$$O_A \in \{\sigma_A\} = \{0 \leqslant \sigma \leqslant \sigma_A + d\};$$

$$O_B \in \{\sigma_B\} = \{\sigma_B + d < \sigma \leqslant \sigma_B + 2d\};$$

$$O_C \in \{\sigma_C\} = \{\sigma_B + 2d < \sigma \leqslant \sigma_C + 4d\};$$

in other cases, $O_D = \{\sigma > \sigma_C + 4d\}$.

For example, the output result here is expressed in lowercase o, the relationship between o and an output neuron value set is the relationship between elements and the set, where as $\{\sigma_A\}$, $\{\sigma_B\}$ and $\{\sigma_C\}$ are the set range of sets set in advance as described below, o is the value given by the on-line identification calculation after training.

From Table 1, d=1.27 is obtained, then:

$$\{\sigma_A\} = \{0 \leqslant \sigma \leqslant 5.07 \times 10^{-3}\};$$

$$\{\sigma_B\} = \{5.07 \times 10^{-3} < \sigma \leqslant 10.15 \times 10^{-3}\};$$

$$\{\sigma_C\} = \{10.15 \times 10^{-3} < \sigma \leqslant 20.31 \times 10^{-3}\};$$

in other cases, $\{\sigma > 20.31 \times 10^{-3}\}$.

Using the sub-network of sample training, under the set training target error $\varepsilon$, the output results are very close to the mean square value of the target pavement roughness in the set national standard. However, the actual pavement condition changes greatly, so the expanded range can better obtain the pavement output result.

When comparing a result $O_A$ and a target $T_A$ corresponding to a certain group of data sets such as $X_A$, the certain group of data sets belong to a certain class within an error range. A network $NET_A$ (see the upper part of Fig. 6) of trained transfer parameters (for example, weight matrix) is used directly in the on-line identification process (see the lower part of Fig. 6).

Three sub-NNs are obtained through three types of pavement identification, on-line identification and judgment are added, and the speed of each type of pavement identification is high, so that the speed and the efficiency are improved. However, a single NN training all types of pavements will result in the situation of slow convergence or difficult convergence.

As shown in Fig. 7, this is a two-layer BP NN with three input neurons, eight hidden neurons and one output neuron. Considering the vehicle as a planar mechanism running on a pavement, in four tire suspension points in contact with the pavement, a left suspension displacement travel, a right suspension displacement travel and a vehicle speed should most reflect the input of the pavement. Therefore, NN input level nodes of Fig. 6 are a root mean square value $L_{RMS}$ of a left suspension displacement dynamic travel, a root mean square value $R_{RMS}$ of a right suspension displacement dynamic travel, and a vehicle speed V, respectively, and a NN output level is a root mean square value $\sigma_{RMS}$ of the grade pavement roughness. The target of NN training is the root mean square geometric mean value $\sigma_A$, $\sigma_B$ or $\sigma_C$ of the corresponding pavement roughness in the national standard GT/T 7031 2005.

In the technique solutions of the present disclosure, trough an algorithm which combine training off-line three different pavement grade targets by three sub-NNs provided by training targets of three pavement grades, and on-line cyclic identification and judgment of the corresponding pavement grades, so that the identification of four common pavements is realized, the problem of pavement identification in some methods known to the inventors is effectively solved. According to the technique solutions of the present disclosure, the pavement roughness grade identification based on the off-line and on-line BP NNs without an exact mathematical model and an exact mathematical model corresponding relationship does not need to know a complicated relationship between an input signal and an output signal, and a learning algorithm is used for approximation and depends on the reliability of the learning algorithm.

Moreover, according to the technique solutions of the present disclosure, a multi-sensor (such as a displacement sensor, a gyroscope and a GPS) mode does not need to be used for obtaining accurate parameters of a mathematical model, only the displacement sensor and the speed information are used, the method of the height sensor information and the speed information is utilized, the type of the displacement sensor is not limited, and the accuracy and the reliability of a learning algorithm are depended on. In the technique solutions of the present disclosure, the root mean square of the suspension dynamic travel of data of two paths of displacement sensors on the left side and the right side is used as input, so that the method is more accurate; and the output layer adopts a nonlinear sigmoid function, so that the convergence is faster.

Moreover, the technique solutions of the present disclosure is more practical and efficient by using an algorithm instead of the design of identifying various pavement grades (8 pavement grades) through a complicated BP NN, the algorithm combines training offline three different pavement grade targets by three sub-NNs provided by training targets of three pavement grades, and on-line cyclic identification and judgment of the corresponding pavement grades, and the algorithm in the technique solutions of the present disclosure is accurate in training and rapid in convergence. According to the technique solutions of the present disclosure, three common pavement grades are trained and judged, and four pavements is identified rapidly and efficiently; and the reliability of different sub-network training and the completeness of the identification model according to different grade pavement training data are good.

It can be seen that the technique solutions of the present disclosure at least achieve the following beneficial effects:

(1) The hardware cost of an adjustable electronic control suspension system is not increased, and the pavement grade learning and evaluation are performed with own height sensor data.

(2) Based on the actual running road of the traditional vehicle, the road is reasonably divided, the practicability of the algorithm is enhanced, the calculation complexity of the algorithm is reduced, and the efficiency is improved; the problem that there are too many pavement grades and it is difficult to reliably apply to improve the performance of the electronic control suspension can be solved.

(3) Multi-path sensor data is fully utilized, the data input of the most relevant pavement roughness is selected, and the accuracy of the pavement identification model is improved; the problems of complicated NN identification algorithm, large processing data volume and low efficiency can be solved.

(4) A vehicle smoothness evaluation means is perfected and a control strategy for carrying out self-adaptive adjustment on an electronic control suspension according to the driving pavement grade is added; the problems of difficulty in establishing a mathematical model of pavement roughness and difficulty in identifying pavement grade (such as difficulty in practical disclosure of identifying the pavement grade and real-time control and adjustment of suspension parameters) caused by complicated pavement spectrum can be solved.

In some alternative embodiments, the technique solutions of the present disclosure, in which seven sub-NNs are trained on eight pavements, the eighth is the remaining road, is much more efficient than a single NN identifying eight targets.

In an optional specific implementation mode, the specific implementation process of the technique solutions of the present disclosure is exemplified in conjunction with the examples shown in Fig. 6 and Fig. 7.

A training target of a BP NN is a geometric mean value of pavement roughness, and activation functions (i.e. transfer functions) of a three-layer BP network are set as sigmoid functions:

$$Sigmoid : g(x) = \frac{2}{1 + e^{-x}} - 1, g'(x) = g(x)(1 - g(x))$$

For example: three-layer BP network and two-layer transfer function. The three layers are: an input layer, a hidden layer and an output layer. If there is a multi-layer network, the hidden layer can be more complicated, changing into two or more layers. The BP network itself is also called a multi-layer parallel network.

As shown in Fig. 7, a sub-network structure of [3 8 1], a learning rate of $\eta$, and an inertia coefficient of $\alpha$ is used for the following training process:

At step 1, initial conditions are that the input of sample p and the target of a certain grade of pavement are X and T

respectively:

$$X = \{x_j^p\}, j = 1,2,3; \{x_1^p, x_2^p, x_3^p\} = \{L_{RMS}, R_{RMS}, V\}$$

$$T = \{t^p\}, p = 1, \cdots, N; \{t^p\} = \{\sigma_{RMS}\}$$

At step 2, the input and output of the ith neuron of the hidden layer are:

$$net_i^p = \sum_{i=1}^{M} w_{ij} x_j^p - \theta_i, (i = 1,2,\cdots,q)$$ ;

$$o_i^p = g(net_i^p), (i = 1,2,\cdots,q)$$ .

At step 3, the input and output of the kth neuron of the output layer are:

$$net_k^p = \sum_{i=1}^{q} w_{ki} o_i^p - \theta_k, (k = 1,2,\cdots,L)$$ ;

$$o_k^p = g(net_k^p), (k = 1,2,\cdots,L)$$ .

At step 4, an error evaluation function is output, it is judged whether the error is less than a set error, and if so, training is quit:

$$\varepsilon > J = \sum_{p=1}^{N} J_p = \frac{1}{2} \sum_{p=1}^{N} \sum_{k=1}^{L} (t_k^p - o_k^p)^2$$ ,

N samples off-line learning.

At step 5, weighting coefficients of the output layer and the hidden layer are calculated and adjusted:

$$\Delta w_{ki} = -\eta \frac{\partial J}{\partial w_{ki}} = \eta \sum_{p=1}^{N} \delta_k^p o_i^p, \quad \delta_k^p = g'(net_k^p) e_k^p = o_k^p (1 - o_k^p)(t_k^p - o_k^p)$$ ;

$$\Delta w_{ij} = -\eta \frac{\partial J}{\partial w_{ij}} = \eta \sum_{p=1}^{N} \delta_i^p o_j^p, \quad \delta_i^p = g'(net_i^p) \sum_{k=1}^{L} \delta_k^p \cdot w_{ki} = o_i^p (1 - o_i^p) \sum_{k=1}^{L} \delta_k^p \cdot w_{ki}$$ ;

$$w_{ki}(k+1) = w_{ki}(k) + \Delta w_{ki} + \alpha[w_{ki}(k) - w_{ki}(k-1)] \quad ;$$

$$w_{ij}(k+1) = w_{ij}(k) + \Delta w_{ij} + \alpha[w_{ij}(k) - w_{ij}(k-1)] \quad .$$

At step 6, the process returns to step 1, and quits until the error of step 3 meets the requirements or the total cycle count is reached.

LRMS is a root mean square value of a left suspension displacement dynamic travel; RRMS is a root mean square value of a right suspension displacement dynamic travel; v is a average vehicle speed; m equals to 3 means that there are three input layer nodes (i.e. LRMS, RRMS, and V); j represents the jth node of the input layer; q equals to 8 means that there are eight hidden layer nodes; i represents the $i^{th}$ node of the input layer; L equals to 1 means that there is one output layer node, namely $\sigma_{RMS}$; k is the $i^{th}$ node of the output layer; $\sigma_{RMS}$ is a root mean square of the grade pavement roughness.

The whole calculation process is a basic calculation algorithm of the BP NN and a training process of a certain sub-NN provided by the technique solutions of the present disclosure, the transfer function set in the technique solutions of the present disclosure adopts a sigmoid function ranging from -1 to +1, and a person using the algorithm can use different transfer functions according to different research targets. The calculation process only corresponds to different research contents, and the selected parameters are different.

In the technique solutions of the present disclosure:

In the training process, the sigmoid function is used for off-line data training, in order to ensure data convergence and obtain more accurate sub-NN parameters, a relatively small inertia coefficient $\alpha$ is used, 6-10 nodes are designed in the hidden layer, and the number of the nodes in the hidden layer is adjusted according to the amount of on-line calculation.

Through the training process, the sample is a grade A pavement, $X_A$ and $T_A$ are used as training sets and targets, and weighting coefficients of the output layer and the hidden layer of the BP NN of the grade A pavement are obtained; and then weighting coefficients of a grade B pavement and a grade C pavement are sequentially obtained. After the off-line training of three grades of pavements is finished and the parameters of the three sub-NNs are obtained, the on-line road identification process can be carried out according to Fig. 6.

In addition, the data of three different pavements cannot be trained in the same NN, since the difference is too large, and the convergence is difficult. The NN is equivalent to a black box, a nonlinear mapping relation is established between the input and the output, a certain amount of data sample training is guaranteed, and the effect of the network can be better.

Because the pavement is continuous when the vehicle runs on the actual pavement, when the pavement grade is identified and judged on-line, the pavement grade is judged for multiple times in one section of road based on the outputs. Assuming that the displacement data acquisition frequency is 100 Hz, one second of 100 data is divided into 10 groups, each group of 10 data obtains the root mean square value of the dynamic travel of the suspension as input, ten on-line pavement judgments is performed within 1 second, the algorithm not only can meet the real-time performance of the identification, but also the identified pavement grade can quickly be used as control conditions where the vehicle electronic control suspension adjusts the suspension height, stiffness or damping, and the reliable application of the road identification algorithm is really realized.

The road identification and judgment method in the present disclosure: 1) is applicable to the pavement grade identification of both an electronic control pneumatic suspension and an electronic control hydro-pneumatic suspension; 2) adopts four division modes for the pavement grades, which can be changed into three divisions under the condition that the pavement identification grade division requirements are not high, where only grade A and grade B pavements are trained and identified, and other pavements serve as the third class of pavements; and 3) has three input variables at the input end of a sub-NN, and the dynamic travel root mean square value of a left suspension and a right suspension is not limited to which suspension data in the left suspension and the right suspension.

Since the processing and functions implemented by the vehicle of the present embodiment basically correspond to the foregoing embodiments, principles, and examples of the apparatus shown in Fig. 5, the description of the present embodiment is not exhaustive, reference can be made to relevant descriptions in the foregoing embodiments, and the description will not be repeated here.

A large number of tests verify that with the technique solutions of the present disclosure, the displacement sensor and the speed information are only used, a method of the height sensor information and the speed information is adopted, the type of the displacement sensor is not limited, the accuracy and the reliability of the learning algorithm are depended on, and the accuracy and the reliability are improved.

According to some embodiments of the present disclosure, a storage medium corresponding to the method for determining a pavement grade is also provided. The storage medium has multiple instructions stored therein. The multiple instructions are loaded by a processor to perform the method for determining a pavement grade described above.

Since the processing and functions implemented by the storage medium of the present embodiment basically correspond to the foregoing embodiments, principles, and examples of the method shown in Fig. 1 to Fig. 4, the description of the present embodiment is not exhaustive, reference can be made to relevant descriptions in the foregoing embodiments, and the description will not be repeated here.

A large number of tests verify that trough an algorithm which combines training off line three different pavement grade targets by three sub-NNs provided by training targets of three pavement grades, and on-line cyclic identification and judgment of the corresponding pavement grades, the technique solutions of the present disclosure is more practical and efficient, and the training is accurate and rapid in convergence.

According to some embodiments of the present disclosure, a vehicle corresponding to the method for determining a pavement grade is also provided. The vehicle includes: a processor for executing multiple instructions; and a memory for storing the multiple instructions. The multiple instructions are stored by the memory and loaded by the processor to perform the method for determining a pavement grade described above.

Since the processing and functions implemented by the vehicle of the present embodiment basically correspond to the foregoing embodiments, principles, and examples of the method shown in Fig. 1 to Fig. 4, the description of the present embodiment is not exhaustive, reference can be made to relevant descriptions in the foregoing embodiments, and the description will not be repeated here.

A large number of tests verify that with the technique solutions of the present disclosure, the root mean square of the suspension dynamic travel of data of two paths of displacement sensors on the left side and the right side is used as input, so that the method is more accurate; an output layer adopts a nonlinear sigmoid function, so that the convergence is faster; three common pavement grades are trained and judged, and the rapid and efficient design of four pavements is identified; and the reliability of different sub-network training and the completeness of the identification model according to different grade pavement training data are good, and the reliability is high.

In summary, it is easy for those skilled in the art to understand that the above-mentioned advantageous modes can be freely combined and superimposed on the premise of no conflict.

The above is only the embodiments of the present disclosure, not intended to limit the present disclosure. As will occur to those skilled in the art, the present disclosure is susceptible to various modifications and changes. Any modifications, equivalent replacements, improvements and the like made within the spirit and principle of the present disclosure should be included within the scope of claims of the present disclosure.

**Claims**

1. A method for determining a pavement grade, comprising:

   acquiring current road information of a current road on which a vehicle to be controlled is located; and
   according to the current road information, identifying on-line, by using $1^{st}$ to $N^{th}$-grade pavement sub-Neural Networks (NNs) obtained by off-line training, a current pavement grade of the current road in set $1^{st}$ to $(N+1)^{th}$ pavement grades, wherein N is a natural number.

2. The method according to claim 1, wherein acquiring the current road information of the current road on which the vehicle to be controlled is located comprises: acquiring vehicle speed information of the vehicle to be controlled and detection data of a height sensor of a suspension system of the vehicle;
   wherein the vehicle speed information comprises a average vehicle speed within a set distance or within a set duration; and/or, the detection data comprises height data or displacement data output by the height sensor.

3. The method according to claim 1 or 2, further comprising:

   obtaining the $1^{st}$ to $N^{th}$-grade pavement sub-NNs via performing off-line training,
   wherein obtaining the $1^{st}$ to $N^{th}$-grade pavement sub-NNs via performing off-line training comprises:

   determining $1^{st}$ to $N^{th}$ sub-NNs based on a set sub-network structure, a set learning rate, a set inertia coefficient and a set weighting coefficient; and

respectively training the 1st to Nth sub-NNs based on collected 1st to Nth road information sample sets to obtain the 1st to Nth-grade pavement sub-NNs meeting a set BP NN training target.

4. The method according to claim 3, wherein in respectively training the 1st to Nth sub-NNs based on the collected 1st to Nth road information sample sets, training a first sub-NN based on a collected first road information sample set comprises:

taking road information of a first-grade pavement as input information of an input layer in the first sub-NN when the first-grade pavement is a sample, taking a target of the first-grade pavement as target information of an output layer in the first sub-NN, and performing off-line training on the first sub-NN through a hidden layer in the first sub-NN;

determining whether an error between output information of the output layer in the first sub-NN and the target information is within a set range;

if the error is within the set range, quitting the off-line training of the first sub-NN;

if the error is not within the set range, re-performing off-line training after adjusting weighting coefficients of the output layer and the hidden layer in the first sub-NN until an error after off-line training is re-performed is within the set range, and quitting the off-line training of the first sub-NN;

or if the error is not within the set range, re-performing off-line training after adjusting weighting coefficients of the output layer and the hidden layer in the first sub-NN until count of re-performing off-line training reaches a set total cycle count, and quitting off-line training of the first sub-NN .

5. The method according to claim 4, wherein adjusting the weighting coefficients of the output layer and the hidden layer in the first sub-NN comprises:

taking the first-grade pavement as a sample, collecting the road information of the first-grade pavement as a training set and a target, and determining the weighting coefficients of an output layer and a hidden layer in a BP NN of the first-grade pavement according to the training set and the target.

6. The method according to any one of claims 3 to 5, wherein
the BP NN training target comprises: a geometric mean value of a pavement roughness;
and/or,
activation functions of two layers from BP networks in the input layer, the hidden layer and the output layer of each NN of the 1st to Nth sub-NNs are sigmoid functions;
and/or,
the number of nodes of the hidden layer of each NN of the 1st to Nth sub-NNs is 6-10.

7. The method according to any one of claims 1 to 6, wherein the 1st to (N+1)th pavement grades comprise: 1st to Nth pavement grades matched with the 1st to Nth-grade pavement sub-NNs, and an (N+1)th pavement grade matched with none of the 1st to Nth-grade pavement sub-NNs,
wherein identifying on-line the current pavement grade of the current road in the set 1st to (N+1)th pavement grades comprises:

judging a pavement grade of the current road using a current set weight matrix of any grade pavement sub-NN in the 1st to Nth-grade pavement sub-NNs;

when current road information input by the any grade pavement sub-NN in the 1st to Nth-grade pavement sub-NNs and result information output by a weighting coefficient matrix trained by the any grade pavement sub-NN do not meet a pavement target range set by a corresponding grade NN, sequentially judging the pavement grade of the current road using other set weight matrices of other grade pavement sub-NNs in the 1st to Nth-grade pavement sub-NNs;

when current road information input by the any grade pavement sub-NN in the 1st to Nth-grade pavement sub-NNs and result information output by a weighting coefficient matrix trained by the any grade pavement sub-NN meet a pavement target range set by a corresponding grade NN, determining that the pavement grade of the current road is a random pavement grade in 1st to Nth pavement grades corresponding to the any grade pavement sub-NN;

or, when current road information input by all grade pavement sub-NNs in the 1st to Nth-grade pavement sub-NNs and result information output by weighting coefficient matrixes trained by all grade pavement sub-NN do not meet a pavement target range set by a corresponding grade NN, determining that the pavement grade of the current road is the (N+1)th pavement grade.

8. An apparatus for determining a pavement grade, comprising:

a real-time acquisition component, configured to acquire current road information of a current road on which a vehicle to be controlled is located; and
an on-line identification component, configured to identify on-line by using $1^{st}$ to $N^{th}$-grade pavement sub-Neural Networks (NNs) obtained by off-line training, a current pavement grade of the current road in set $1^{st}$ to $(N+1)^{th}$ pavement grades, according to the current road information, wherein N is a natural number.

9. The apparatus according to claim 8, wherein the real-time acquisition component acquiring the current road information of the current road on which the vehicle to be controlled is located comprises:

acquiring vehicle speed information of the vehicle to be controlled and detection data of a height sensor of a suspension system of the vehicle,
wherein the vehicle speed information comprises a average vehicle speed within a set distance or within a setting duration; and/or, the detection data comprises height data or displacement data output by the height sensor.

10. The apparatus according to claim 8 or 9, further comprising:

an off-line training component, configured to obtain the $1^{st}$ to $N^{th}$-grade pavement sub-NNs via performing off-line training,
wherein the off-line training component obtaining the $1^{st}$ to $N^{th}$-grade pavement sub-NNs via performing off-line training comprises:

determining $1^{st}$ to $N^{th}$ sub-NNs based on a set sub-network structure, a set learning rate, a set inertia coefficient and a set weighting coefficient; and
respectively training the $1^{st}$ to $N^{th}$ sub-NNs based on collected $1^{st}$ to $N^{th}$ road information sample sets to obtain the $1^{st}$ to $N^{th}$-grade pavement sub-NNs meeting a set BP NN training target.

11. The apparatus according to claim 10, wherein in the off-line training component respectively training the $1^{st}$ to $N^{th}$ sub-NNs based on the collected $1^{st}$ to $N^{th}$ road information sample sets, the off-line training component training a first sub-NN based on a collected first road information sample set comprises:

taking road information of a first-grade pavement as input information of an input layer in the first sub-NN when the first-grade pavement is a sample, taking a target of the first-grade pavement as target information of an output layer in the first sub-NN, and performing off-line training on the first sub-NN through a hidden layer in the first sub-NN;
determining whether an error between output information of the output layer in the first sub-NN and the target information is within a set range;
if the error is within the set range, quitting the off-line training of the first sub-NN;
if the error is not within the set range, re-performing off-line training after adjusting weighting coefficients of the output layer and the hidden layer in the first sub-NN until an error after off-line training is re-performed is within the set range, and quitting the off-line training of the first sub-NN;
or if the error is not within the set range, re-performing off-line training after adjusting weighting coefficients of the output layer and the hidden layer in the first sub-NN until count of re-performing off-line training reaches a set total cycle count, and quitting off-line training of the first sub-NN.

12. The apparatus according to claim 11, wherein the off-line training component adjusting the weighting coefficients of the output layer and the hidden layer in the first sub-NN comprises:

taking the first-grade pavement as a sample, collecting the road information of the first-grade pavement as a training set and a target, and determining the weighting coefficients of an output layer and a hidden layer in a BP NN of the first-grade pavement according to the training set and the target.

13. The apparatus according to any one of claims 10 to 12, wherein
the BP NN training target comprises: a geometric mean value of a pavement roughness;
and/or,
activation functions from two layers of BP networks in the input layer, the hidden layer and the output layer of each NN of the 1st to Nth sub-NNs are sigmoid functions;
and/or,
the number of nodes of the hidden layer of each NN of the 1st to Nth sub-NNs is 6-10.

14. The apparatus according to any one of claims 8 to 13, wherein the 1st to (N+1)th pavement grades comprise: 1st to Nth pavement grades matched with the 1st to Nth-grade pavement sub-NNs, and an (N+1)th pavement grade matched with none of the 1st to Nth-grade pavement sub-NNs,
wherein identifying on-line the current pavement grade of the current road in the set 1st to (N+1)th pavement grades comprises:

judging a pavement grade of the current road using a current set weight matrix of a any grade pavement sub-NN in the 1st to Nth-grade pavement sub-NNs;
when current road information input by the any grade pavement sub-NN in the 1st to Nth-grade pavement sub-NNs and result information output by a weighting coefficient matrix trained by the any grade pavement sub-NN do not meet a pavement target range set by a corresponding grade NN, sequentially judging the pavement grade of the current road using other set weight matrices of other grade pavement sub-NNs in the 1st to Nth-grade pavement sub-NNs;
when current road information input by the any grade pavement sub-NN in the 1st to Nth-grade pavement sub-NNs and result information output by a weighting coefficient matrix trained by the any grade pavement sub-NN meet a pavement target range set by a corresponding grade NN, determining that the pavement grade of the current road is a random pavement grade in 1st to Nth pavement grades corresponding to the any grade pavement sub-NN;
or, when current road information input by all grade pavement sub-NNs in the 1st to Nth-grade pavement sub-NNs and result information output by weighting coefficient matrixes trained by all grade pavement sub-NN do not meet a pavement target range set by a corresponding grade NN, determining that the pavement grade of the current road is the (N+1)th pavement grade.

15. A vehicle, comprising the apparatus for determining a pavement grade according to any one of claims 8 to 14.

16. A storage medium, having a plurality of instructions stored therein, the instructions being configured to be loaded by a processor to perform the method for determining the pavement grade according to any one of claims 1 to 7.

17. A vehicle, comprising:

a processor, configured to execute a plurality of instructions; and
a memory, configured to store the plurality of instructions,
wherein the plurality of instructions are configured to be stored by the memory and loaded by the processor to perform the method for determining a pavement grade according to any one of claims 1 to 7.

Current road information of a current road on which a vehicle to be controlled is located is acquired    $\sim$ S110

According to the current road information, a current pavement grade of the current road in set 1$^{st}$ to (N+1)$^{th}$ pavement grades is identified On line by using first to Nth-grade pavement sub-Neural Networks (NNs) obtained by off-line training, and N is a natural number    $\sim$ S120

**Fig. 1**

1$^{st}$ to N$^{th}$ sub-NNs are determined based on a set sub-network structure (e.g. sub-network structure of [3 8 1]), a set learning raTe (e.g. the learning rate is η), a set inertia coefficient (e.g. the inertia coefficient is α) and a set weighting coefficient    $\sim$ S210

The 1$^{st}$ to N$^{th}$ sub-NNs are respectively trained based on collected 1$^{st}$ to N$^{th}$ road information sample sets to obtain 1$^{st}$ to N$^{th}$ -grade pavement sub-NNs meeting a set BP NN training target    $\sim$ S220

**Fig. 2**

Road information of a first-grade pavement is taken as input information of an input layer in the first sub-NN when the first-grade pavement is a sample, a target of the first-grade pavement is taken as target information of an outpUt layer in the first sub-NN, and off-line training is performed on the first sub-NN through a hidden layer in the first sub-NN

S310

It is determined whether an error between output information of the output layer in the first sub-NN and the target information is within a set range

S320

If the error is within the set range, the off-line training of the first sub-NN is quitted

S330

If the error is not within the set range, off-line training is re-performed after weighting coefficients of the output layer and the hidden layer in the first sub-NN are adjusted until an error after off-line training is re-performed is within the set range, and off-line training of the first sub-NN is quitted; or if the error is not within the set range, off-line training is re-performed after weighting coefficients of the output layer and the hidden layer in the first sub-NN are adjusted until count of re-performing off-line training reaches a set total cycle count, and off-line training of the first sub-NN is quitted.

S340

**Fig. 3**

A pavement grade of the current road is judged by using a current set weight matrix of a random-grade pavement sub-NN in the first to Nth-grade pavement sub-NNs

S410

When current road information input by the random-grade pavement sub-NN in the first to $N^{th}$-grade pavement sub-NNs and result information output by a weighting coefficient matrix trained by the random-grade pavement sub-NN do not meet a pavement target range set by a corresponding grade NN, sequentially the pavement grade of the cuRrent road judged by using other set weight matrices of other grade pavement sub-NNs in the first to Nth-grade pavement sub-NNs

S420

When current road information input by the random-grade pavement sub-NN in the first to $N^{th}$-grade pavement sub-NNs and result information output by a weighting coefficient matrix trained by the random-grade pavement sub-NN meet a pavement target range set by a corresponding grade NN, that the pavement grade of the current Road is a random pavement grade in first to Nth pavement grades corresponding to the random-grade pavement sub-NN is determined

S430

When current road information input by all grade pavement sub-NNs in the first to $N^{th}$-grade pavement sub-NNs and result information output by weighting coefficient matrixes trained by all grade pavement sub-NN do not meet a pavement target range set by a corresponding grade NN, that the pavement grade of the current road is the $(N+1)^{th}$ pavement grade is determined

S440

**Fig. 4**

Fig. 5

**Fig. 6**

$w_{ij}$

$j$

$i$

$w_{ki}$

$k$

$L_{RMS}$

$R_{RMS}$

$V$

$M=3$

$q=8$

$L=1$

$\sigma_{RMS}$

A BP network structure
is [M q L]=[3 8 1]

Input layer

Hidden layer

Output layer

**Fig. 7**

## INTERNATIONAL SEARCH REPORT

| International application No. |
|---|
| **PCT/CN2019/104640** |

**A.  CLASSIFICATION OF SUBJECT MATTER**

B60W 40/00(2006.01)i

According to International Patent Classification (IPC) or to both national classification and IPC

**B.  FIELDS SEARCHED**

Minimum documentation searched (classification system followed by classification symbols)

B60W; G07C; G08G; G06F

Documentation searched other than minimum documentation to the extent that such documents are included in the fields searched

Electronic data base consulted during the international search (name of data base and, where practicable, search terms used)

WPI; EPODOC; CNKI; CNPAT: 路面, 道路, 识别, 神经网络, 学习, 训练, 模型, road, path, recogni+, identif+, neural w network, road w surface, learn, training, model

**C.  DOCUMENTS CONSIDERED TO BE RELEVANT**

| Category* | Citation of document, with indication, where appropriate, of the relevant passages | Relevant to claim No. |
|---|---|---|
| PX | CN 109398363 A (GREE ELECTRIC APPLIANCES, INC. OF ZHUHAI) 01 March 2019 (2019-03-01)<br>claims 1-17 | 1-17 |
| X | CN 101275900 A (JIANGHAN UNIVERSITY) 01 October 2008 (2008-10-01)<br>description, page 3, paragraph 3 to page 7, paragraph 3 | 1-17 |
| A | CN 108520155 A (DALIAN UNIVERSITY OF TECHNOLOGY) 11 September 2018 (2018-09-11)<br>entire document | 1-17 |
| A | CN 101609606 A (TSINGHUA UNIVERSITY) 23 December 2009 (2009-12-23)<br>entire document | 1-17 |
| A | JP 2006312414 A (TOYOTA MOTOR CORP.) 16 November 2006 (2006-11-16)<br>entire document | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 November 2019** | **27 November 2019** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

INTERNATIONAL SEARCH REPORT
Information on patent family members

International application No.

**PCT/CN2019/104640**

| Patent document cited in search report | | | Publication date (day/month/year) | Patent family member(s) | Publication date (day/month/year) |
|---|---|---|---|---|---|
| CN | 109398363 | A | 01 March 2019 | None | |
| CN | 101275900 | A | 01 October 2008 | None | |
| CN | 108520155 | A | 11 September 2018 | None | |
| CN | 101609606 | A | 23 December 2009 | None | |
| JP | 2006312414 | A | 16 November 2006 | None | |

Form PCT/ISA/210 (patent family annex) (January 2015)

**EP 3 871 938 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811243157